# EUROPEAN PATENT APPLICATION

(11) **EP 0 599 659 A1**
(43) Date of publication of application: **01.06.1994**
(21) Application number: 93309456.7
(22) Date of filing: 26.11.1993
(51) Int. Cl.: H04B 7/26, H04Q 7/00

(54) **Booster for use in combination with radio apparatus**

(30) Priority: 26.11.1992 JP 317035/92
(71) Applicant: NEC CORPORATION, Tokyo (JP)
(72) Inventor: Hatakeyama, Naoto, c/o NEC Corporation, Tokyo (JP)
(74) Representative: Orchard, Oliver John

(57) **Abstract**

A booster (2) for use in combination with a portable radio apparatus is provided, in which power consumed by a power amplifier (22) for amplifying a burst transmitting signal is reduced. The booster (2) controls the power amplifier (22) on the basis of timing information of the leading and trailing edges of the burst tranmsmitting signal delivered from the portable radio apparatus such that power supply to the power amplifier is substantially interrupted in a time interval during which no burst transmitting signal is existent.

## Description

### BACKGROUND OF THE INVENTION

### 1. Field of the Invention

The present invention relates to a booster for use in combination with a radio apparatus, and more specifically to a booster capable of lowering power consumed by a power amplifier serving to amplify a burst transmitting signal.

### 2. Description of the Prior Art

Portable radio apparatuses or cellular telephones of portable type have been popularized in recent years, and digital systems are being put into practical use in addition to that of analog systems for use in those apparatuses.

On the other hand, wide use has been made of mobile telephones prior to the portable radio appara- tuse, and a demand is being raised recently for using a portable radio apparatus as a mobile telephone of cellular type in an automobile.

Such portable radio apparatuses suffer, when compared with mobile telephones, from such difficulties that (1) radio waves to be transmitted have reduced levels, (2) available time is limited, (3) an antenna has a rather small gain, and (4) a service area is narrow. The portable radio apparatuses are therefore unlikely to be applied intactly to mobile telephones.

For solving such difficulties, a mobile antenna with a greater gain is used together with a mobile battery with a greater capacity as a power supply, and an amplifier, called a booster for amplifying the level of transmitted radio waves to a level allowable in a mobile telephone is employed in combination with a portable radio apparatus. Hereby, a portable radio apparatus of digital type becomes usable as a mobile telephone.

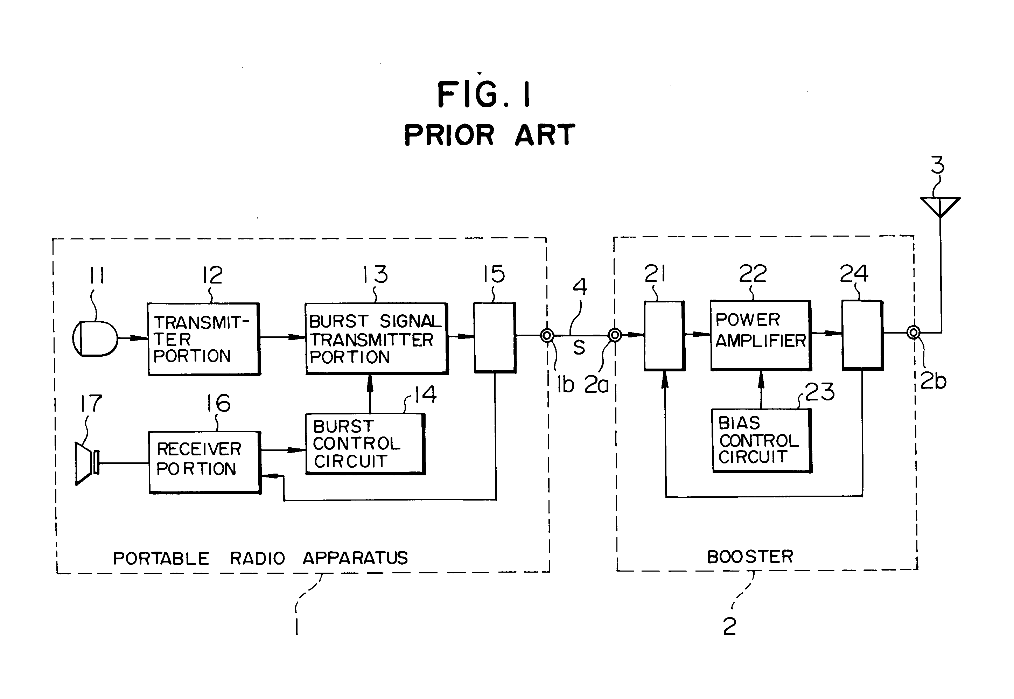

Referring to FIG.1, there is illustrated a connection of a booster and a portable radio apparatus which is contrivable on the basis of a prior art technique for the purpose of realizing the foregoing utilization of a digital type portable radio apparatus as a mobile telephone.

A portable radio apparatus 1 comprises a microphone 11 through which a speech is inputted, a transmitter portion 12, a burst signal transmitter portion 13, a burst control circuit 14, a duplexer 15, a receiver portion 16, and a speaker 17. The transmitter portion 12 has a function to A/D-convert a speech signal received from the microphone 11 and generate a digitized RF (radio frequency) signal needed to generate a burst transmitting signal and amplify the same. The receiver portion 16 has a function to demodulate the received digitized RF signal, D/A-convert t he same to a speech signal, and deliver the same to the speaker 17. Circuit arrangement of the transmitter portion 12 and the receiver portion 16 are well known, which are not a subject matter of the present invention and hence the description thereof will be omitted.

In contrast, a booster 2 comprises a duplexer 21, a power amplifier 22 for amplifying the level of a burst transmitting signal from the portable radio apparatus 1, a bias control circuit 23, and a duplexer 24.

The portable radio apparatus 1 and the booster 2 both include a CPU (not shown) which controls circuit operation upon signal transmission. Designated at 3 is a mobile antenna.

The portable radio apparatus 1 is interconnected at its output terminal 1 b with an input terminal 2a of the booster 2 through a cable 4, and the booster 2 is interconnected at its output terminal 2b with the mobile antenna 3.

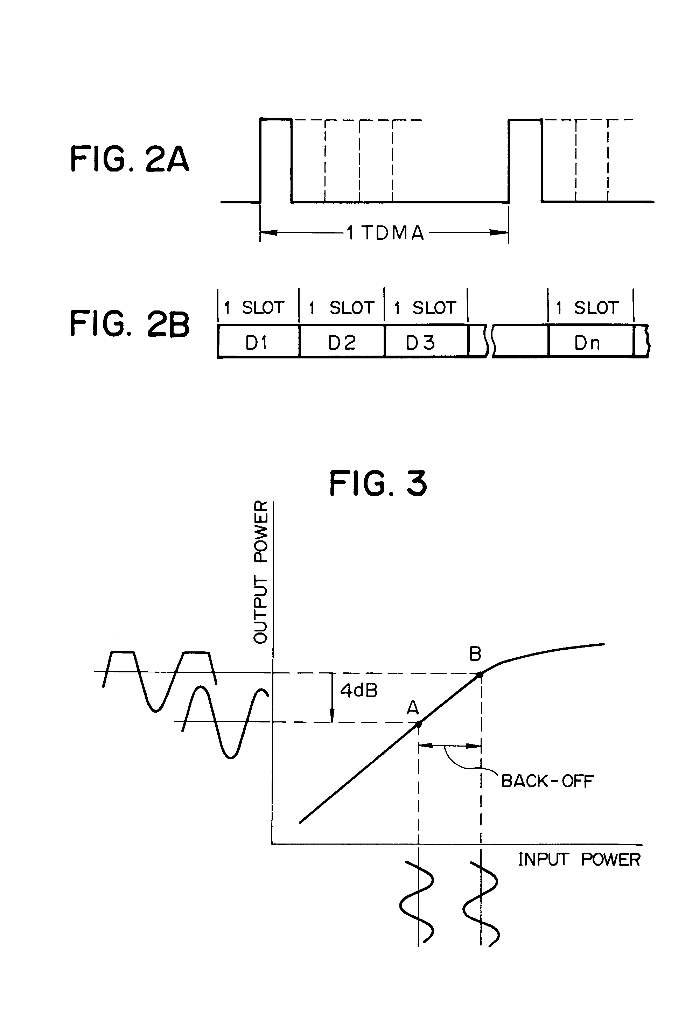

The digital portable radio apparatus 1 transmits, as illustrated in FIG.2A, data divided into a plurality (n) of slots as illustrated in FIG.2B for each slot on the basis of a TDMA(Time Division Multi Access) technique. Accordingly, the burst control circuit 14 intermittently controls the burst signal transmitter portion 13 for each TDMA, whereby the burst signal transmitter portion 13 delivers a burst transmitting signal S from the output terminal 1 b of the portable radio apparatus 1, which signal is in turn transmitted to the input terminal 2a of the booster 2 through the cable 4. In the booster 2, the power amplifier 22 amplifies a leading edge waveform, a trailing edge waveform, and a modulation waveform, etc., of the transmitting signal S without causing any distorsion thereon, and sends out the amplified signal via the transmission output terminal 2b. The bias control circuit 23 controls bias conditions such that the power amplifier 22 has a complete linear amplification characteristic.

The prior art booster 2 for the portable radio apparatus described above requires amplification in a linear region of the power amplifier 2, so thatthe power amplifier 2 is needed to be shifted at its operating point (called back-off) to an output point A lower by 3 to 4 dB or more than a maximum saturated output point B as illustrated in FIG.3.

The prior art booster 2 therefore suffers from a difficulty that power consumed by the booster 2 becomes severely greater than that of a prior art analog FM power amplifier which is operable in a non-linear manner, because of the just-mentioned linear operation of the booster2, resulting in the booster2 getting large-sized.

### SUMMARY OF THE INVENTION

To solve the difficulty with the prior art, it is an object of the present invention to provide a booster for a portable radio apparatus wherein there is reduced power consumed by a power amplifier serving to amplify a burst transmitting signal.

The booster for a portable radio apparatus according to the present invention controls the power amplifier serving to amplify a burst transmitting signal based upon the timing information of the leading edge and the trailing edge of a burst transmitting signal transmitted from the portable radio apparatus such that power supply to the power amplifier is substantially interrupted during a time period in which burst transmitting signal is existent.

### BRIEF DESCRIPTION OF THE DRAWINGS

FIG.1 is a block diagram exemplarily illustrating a combination of a portable radio apparatus and a booster contrivable on the basis of prior art technology;
FIG. 2A is a view illustrating a TDMAsystem employed in a digital portable radio apparatus;
FIG.2B is a view illustrating a data format divided into slots;
FIG.3 is a view illustrating the amplification characteristics and the back-off of a power amplifier;
FIG.4 is a block diagram illustrating an embodiment of the booster according to the present invention in the state where it is interconnected with the portable radio apparatus;
FIG.5 is a flowchart illustrating the operation of a control signal generator circuit of the portable radio apparatus;
FIG.6 is a view illustrating timings of transmission and reception between a portable radio apparatus as a mobile station and a base station; and
FIG.7 is a flowchart illustrating the operation of a burst control circuit of the booster.

### DETAILED DESCRIPTION OF PREFERRED EMBODIMENT

In the following, the present invention will be described with reference to the accompanying drawings.

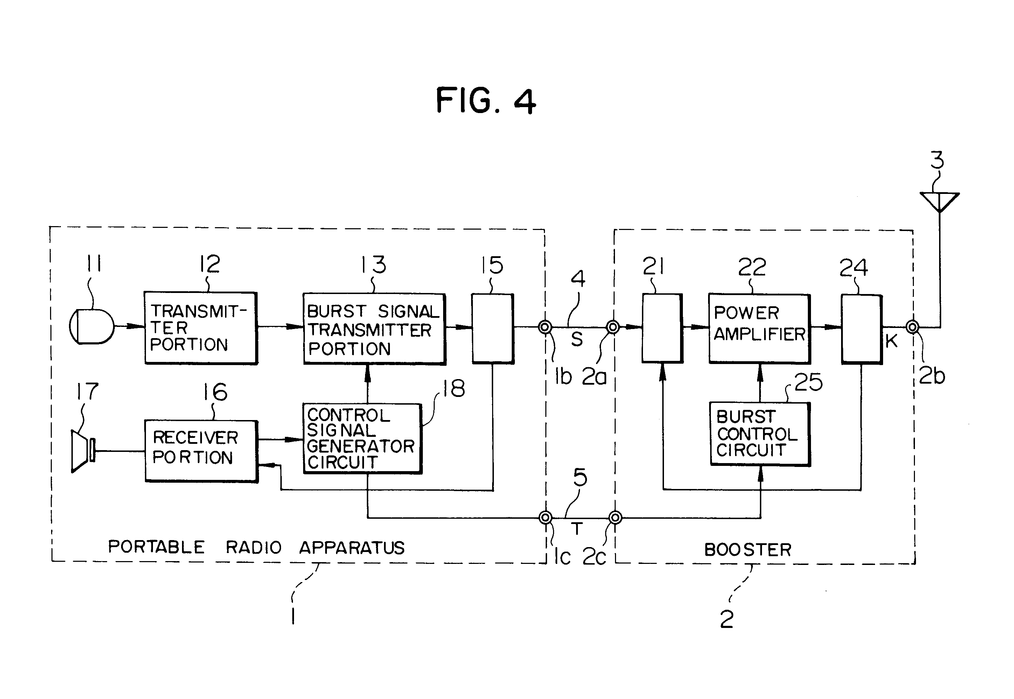

Referring to FIG.4, there is illustrated in the form of a block diagram an embodiment of a booster according to the present invention which is connected with a portable radio apparatus. In FIG.4, the same reference numbers as used in FIG.1 designate the same constituent portions, and hence the description will be omitted.

A portable radio apparatus 1 comprises a microphone 1, a transmitter portion 12, a burst signal transmitter portion 13, a control signal generator circuit 18, a duplexer 15, a receiver portion 16, and a speaker 17. The control signal generator circuit 18 intermittently controls the burst signal transmitter portion 13 in the interval of 1 TDMA in the same manner as in the burst control circuit 14 of the portable radio apparatus 1 in the prior art shown in FIG.1, and issues a control signal T including the timing information of the burst transmitting signal S (transmitting burst waveform) and the information of the peak of the transmitting signal S.

The burst control circuit 25 of a booster 2 controls a power amplifier 22 on the basis of the timing information of the burst transmitting signal S included in the control signal outputted from the control signal generator circuit 18 of the portable radio apparatus 1 and of the peak information of the transmitting signal S.

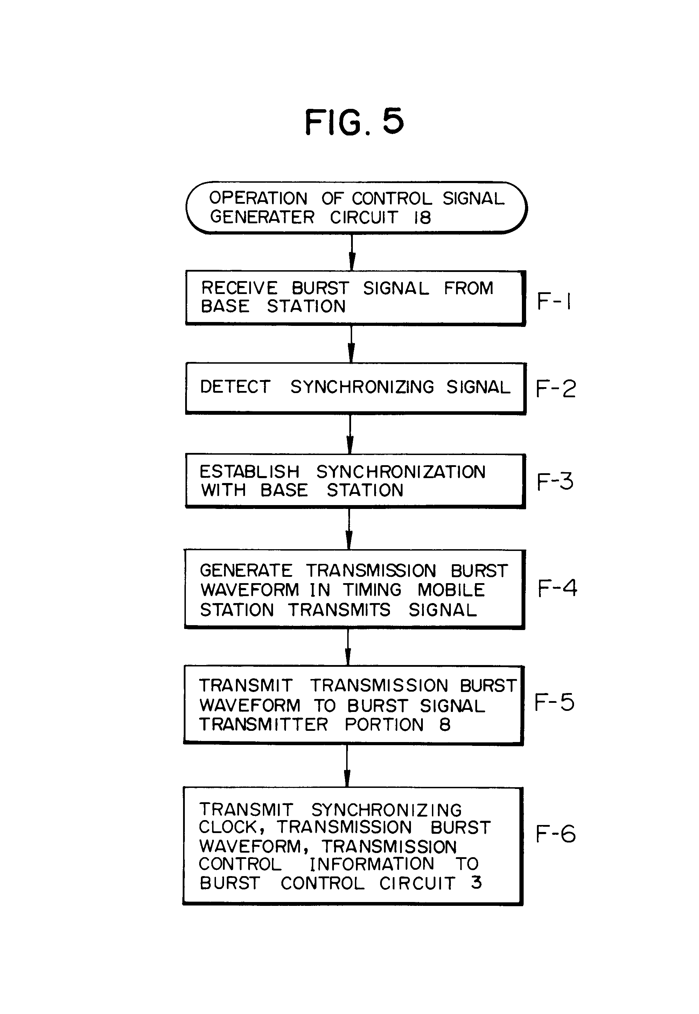

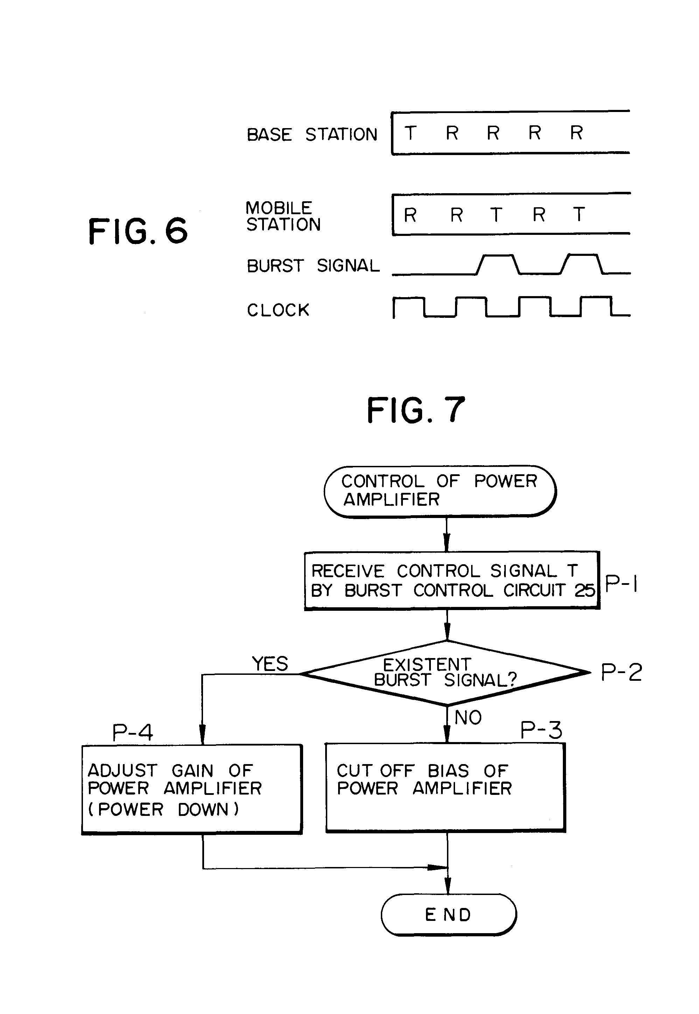

In the following, there will be described an operation of the booster 2 according to the present invention with reference to FIGs.5 and 7.

Referring to FIG.5, there is illustrated a flowchart describing the operation of the control signal generator circuit 18 of the portable radio apparatus 1.

The mobile antenna 3 receives a burst signal from a base station (F-1), a synchronizing signal included in the burst signal is detected (F-2). A clock signal matched with transmission timing at the base station is generated on the basis of the detected synchronizing signal for establishment of synchronization with the base station (F-3). On the basis of the clock with which the synchronization has been established, there is generated a transmitting burst signal waveform of the transmitting burst signal from a mobile station (portable radio apparatus 1) when the base station is in a receiving mode as illustrated in FIG.6 (F-4), which burst waveform is transmitted to the burst signal transmitter portion 13 (F-5).

On the contrary, the control signal generator circuit 18 delivers a control signal T containing the synchronizing dock and the transmitting burst waveform together with transmission control information via the cable 5 to the burst control circuit 25 (F-6). The transmission control information includes pieces of information on: (a) whether or not the booster 2 is ready for transmission, (b) whether or not the potable radio apparatus 1 is in a transmission state, and (c) a transmitting signal level.

In contrast, in the booster 2, the burst control circuit 25 receives the control signal T from the control signal generator circuit 18 of the portable radio apparatus 1 through the input terminal 2c (P-1). The control signal T includes the synchronizing clock, the transmitting burst waveform, and the tranmsission control information. The burst control circuit 25 controls the power amplifier 22 on the basis of the control signal T as follows.

A CPU of the booster 2 first judges on the basis of the control signal Twhetheror not the burst tranm- sitting signal S is existent (P-2). Without the burst tramsitting signal S, the CPU cuts off the bias of the power amplifier 22 during that time interval (P-3).

Hereby, power supply to the power amplifier 22 is cut off for saving of electric power. Against this, if the burst termsitting signal S is existent, there is executed the so-called power-down operation of reducing the gain of the power amplifier 22 by a predetermined rate on the basis of the peak value of the transmitting signal included in the control signal T(P-4).

Thus, the burst transmitting signal K powered up by the power amplifier 22 under the control of the burst control circuit 25 is transmitted from the mobile antenna 3 to the base station.

According to the present invention, as described above, power supply to the power amplifier of the booster is substantially interruptd in the time interval during which no burst signal is existent, and hence power consumption is reduced. Further, the power amplifier is useable keeping the same waveform of the burst signal as that of the burst transmitter portion for driving the transmission. This ensures high efficiency, low power consumption, and miniaturization of the apparatus as a whole.

Although in the above embodiment the booster according to the present invention is exemplarily used as a mobile telephone of cellular type by interconnection thereof with a duplex type portable radio apparatus, the present invention may be used for other various applications without limiting such duplex type radio apparatuses. For example, the present invention may be applied to a system where transmission and reception are alternately performed using a single frequency, say, a press-to-talk or simplex system adopted in personal radio devices, or a system where transmission and reception are alternately performed using two frequencies, say, a dusimplex system radio apparatus adoptd in a multi channel access (MCA) system.

## Claims

1. A booster for use in combination with a radio apparatus comprising:
a power amplifier for amplifying a burst transmitting signal delivered from the radio apparatus;
judgement means for judging whether or not the burst transmiting signal is existent, on the basis of a control signal issued from the radio apparatus; and
burst control means for controlling said power amplifier such that power consumed by said power amplifier is reduced when the burst transmitting signal is not existent.

2. A booster according to claim 1 wherein said burst control means has a bias controlling function to control the bias of said power amplifier.

3. A booster according to claim 1 wherein said control signal includes peak information of the burst transmitting signal.

4. A booster according to claim 3 wherein said burst control means controls a gain of said power amplifier based upon the peak of the burst transmitting signal.

5. A booster according to claim 1 wherein said radio apparatus includes a control signal generator circuit which is to determine burst timing and issues a control signal including burst timing information.

6. A booster according to claim 5 wherein the control signal issued from said control signal generator circuit includes peak information of the burst transmitting signal.

7. A booster according to claim 1 wherein said radio apparatus is a portable radio apparatus of duplex system.
